# EUROPÄISCHE PATENTSCHRIFT

(11) **EP 2 193 081 B1**
(45) Veröffentlichungstag und Bekanntmachung des Hinweises auf die Patenterteilung: **22.08.2012**
(21) Anmeldenummer: 08801320.6
(22) Anmeldetag: 10.09.2008
(51) Int. Cl.: B64D 11/00

(54) **LEICHTBAUELEMENT**
LIGHTWEIGHT CONSTRUCTION ELEMENT
COMPOSANT LÉGER

(30) Priorität: 18.09.2007 DE 102007044748
(43) Veröffentlichungstag der Anmeldung: 09.06.2010
(73) Patentinhaber: E.I.S. Aircraft GmbH, 53949 Dahlem (DE)
(72) Erfinder: HUPPERICH, Gerold, 53949 Dahlem (DE); BREUER, Jochen, Karl, 22763 Hamburg (DE)
(74) Vertreter: Huebner, Stefan Rolf
(86) Internationale Anmeldenummer: PCT/DE2008/001516
(87) Internationale Veröffentlichungsnummer: WO 2009/036738

(56) Entgegenhaltungen:
- DE-A1- 10 014 433
- GB-A- 2 379 246

## Beschreibung

Die Erfindung betrifft ein Leichtbauelement zur Befestigung eines Raumteilers in einem Flugzeuginnenraum nach dem Oberbegriff des Anspruchs 1.

In der Luftfahrttechnik besteht ein ständiges Bestreben, die Bauteile von Flugzeugen oder im Flugzeuginnenraum verwendete Elemente hinsichtlich ihres Gewichts zu optimieren, wodurch sich Treibstoffkosten reduzieren bzw. die zulässige Zuladung des Flugzeugs erhöhen lässt. Auch Elemente zur Befestigung von Raumteilern im Fahrzeuginnenraum werden daher in Leichtbauweise hergestellt.

Raumteiler für Flugzeuginnenkabinen sind zum Beispiel aus der DE 100 80 841 B4 bekannt. Sie lassen sich an mehreren, über die Länge des Flugzeugs verteilten Positionen zur Unterteilung verschiedener Kabinenbereiche anbringen, etwa zur Trennung des Bereichs der ersten Klasse von dem der Economy Class. Die Festlegung der Raumteiler erfolgt am oberen Ende wegen des gekrümmten Verlaufs der Bordinnendecken von Flugzeugen und der im Deckenbereich angeordneten Gepäckfächer und sonstiger Einrichtungsteile nicht direkt an der Decke, sondern an unterhalb der Decke festgelegten Befestigungselementen.

Zur Befestigung von Raumteilern sind Leichtbauelemente bekannt, die über Montagepunkte innerhalb des Flugzeuginnenraums festgelegt werden und an ihrem unteren, zum Kabinenboden hin weisenden Ende ein Halteelement zur lösbaren Befestigung des Raumteilers aufweisen. Die Raumteiler werden in die Halteelemente eingehängt, weshalb die Leichtbauelemente das Gewicht der Raumteiler zu tragen haben. Darüber hinaus müssen die Leichtbauelemente so ausgelegt sein, dass sie auch weiteren Belastungen standhalten, etwa durch stolpernde oder stürzende Fluggäste, die an dem Raumteiler Halt suchen. Aufgrund einerseits der Anforderung an einen möglichst leichten Aufbau der Elemente und gleichzeitig einer zuverlässigen Übertragung der an diesen angreifenden Kräfte ergeben sich besondere Anforderungen an den Aufbau der Leichtbauelemente.

Aus dem Stand der Technik ist es einerseits bekannt, die Leichtbauelemente aus einer tragenden Aluminium-Struktur, beispielsweise in Fachwerkbauweise, mit einer darüber liegenden Verkleidung auszubilden. Bei solchen Elementen werden die Kräfte über die im Inneren des Leichtbauelements angeordnete Aluminium-Struktur und die Montagepunkte auf die Tragstruktur des Flugzeugs übertragen. Bei solchen Leichtbauelementen hat sich vor allem die im Kraftfluss liegende Aluminium-Struktur hinsichtlich ihres Gewichts als nachteilig erwiesen.

Darüber hinaus sind Leichtbauelemente bekannt, die aus in Sandwich-Bauweise hergestellten Leichtbaupaneelen zusammengesetzt sind. Diese Leichtbaupaneele sind als Standardteile erhältlich und weisen einen mehrlagigen, über die gesamte Fläche gleichbleibenden Aufbau aus einer inneren Wabenlage und diese nach außen hin verkleidenden Deckschichten auf. Die Leichtbaupaneele werden entsprechend der gewünschten Kontur des Leichtbauelements zusammengesetzt, wobei die Kraftübertragung von dem den Raumteiler aufnehmenden Halteelement hin zu den Montagepunkten an der Kabine im Wesentlichen durch die innere Wabenstruktur erreicht wird. Auch diese Elemente haben sich aufgrund ihres Sandwich-Aufbaus als nachteilig erwiesen. Zum einen befinden sich Wabenstrukturen in allen Bereichen des Elements, also auch in jenen, die die zur Übertragung von Kräften nicht beitragen. Zum anderen wird die Konstruktionsfreiheit durch die Verwendung von Wabenstrukturen beschränkt, insbesondere lassen sich stark gekrümmt verlaufende und sphärische Konturen nur mit großem Aufwand herstellen.

Aus der GB 2 379 246 A bekannt ist ein in Leichtbauweise hergestellter Stützarm für eine Flugzeugtür. Der Stützarm setzt sich aus einer inneren und einer äußeren Schale und aus im Inneren des Stützarms verlaufenden, rippenartigen Bändern zusammen. Die Bänder sollen dem Stützarm Festigkeit verleihen. Sie sind dafür vorgesehen und geeignet, im Wesentlichen den Kraftfluss im Stützarm aufzunehmen.

Aus der DE 100 14 433 A1 ist ein Strangführungshebel für eine Flechtmaschine bekannt. Damit dieser bei geringer Masse eine hohe Verwindungssteifigkeit und Stabilität gegenüber den Machinenbelastungen aufweist, ist er als geschlossener Hohlkörper aus ein- oder mehrschichtigen Laminatschalen gestaltet. Vorgeschlagen wird insbesondere die Verwendung von Schalen aus einem faserverstärkten Kunststofflaminat.

Der Erfindung liegt die Aufgabe zugrunde, ein Leichtbauelement zur Befestigung eines Raumteilers in einem Flugzeuginnenraum bereitzustellen, das sich neben einem leichtgewichtigen Aufbau auch durch eine dem Konstrukteur ein Höchstmaß an Gestaltungsfreiheit bietende Konstruktion auszeichnet.

Diese Aufgabe wird durch ein Leichtbauelement mit den Merkmalen des Anspruchs 1 gelöst.

Durch die Kraftflussverbindung der Montagepunkte über die konturbildenden Laminatschalen mit dem Halteelement lässt sich das Gewicht des Leichtbauelements gegenüber den aus dem Stand der Technik bekannten Lösungen reduzieren. Höher belastete Bereiche können gezielt durch eine oder mehrere zusätzliche Laminatschichen verstärkt werden, so dass in un- oder niedrig belasteten Bereichen kein unnötiges Gewicht anfällt. Darüber hinaus bietet die Laminatbauweise gegenüber der herkömmlichen Sandwich-Bauweise eine größere Gestaltungsfreiheit. Die Laminatschichten können beispielsweise in einer Negativform entsprechend der gewünschten Endkultur des Leichtbauelements übereinander geschichtet und anschließend unter Druck und Temperatur zu einem im Wesentlichen homogenen Materialverbund verbunden werden. Dabei sind den erreichbaren Formen kaum Grenzen gesetzt.

Aufgebaut ist das Leichtbauelement aus drei Schalen, wobei zwei die Seitenwände des Leichtbauelements bildende Laminatschalen und eine dazwischen liegend angeordnete, untere Laminatschale über Fügestellen miteinander verbunden sind. Die Laminatschalen sind in der Weise miteinander verbunden, dass ihre Längsränder sich überlappen, und die Verbindung entlang dieser überlappenden Ränder besteht, vorzugsweise durch Verkleben. Alternativ ist ein Vernieten oder Verschrauben möglich, auch andere Verbindungstechniken sind denkbar.

Die untere Laminatschale weist eine Aufnahme zur Unterbringung des Halteelements auf. Die Aufnahme kann an die Kontur des Halteelements angepasst sein, beispielsweise kann die Aufnahme bei einem schienenförmigen Halteelement eine längliche Ausnehmung korrespondierenden Querschnitts sein.

In vorteilhafter Ausgestaltung wird vorgeschlagen, dass die Laminatschalen aus einem faserverstärkten Material bestehen. Faserverstärkte Materialien zeichnen sich bei geringem Gewicht insbesondere durch eine hohe Zugfestigkeit aus. Eingesetzt werden können alle bekannten faserverstärkten Materialien, beispielsweise glasfaserverstärkter Kunststoff (GVK) oder auch karbonfaserverstärkte Werkstoffe (CFK). Die Anordnung der Fasern kann entsprechend den standzuhaltenden Belastungen bzw. den zu übertragenden Kräften gewählt werden. Beispielsweise können die Fasern parallel zueinander oder auch Gewebe von sich kreuzenden Fasern eingesetzt werden.

Von besonderem Vorteil für eine leicht bauende und gleichzeitig hoch belastbare Bauweise ist eine Ausgestaltung, wonach die Materialstärke der Laminatschalen bereichsweise unterschiedlich ist. Höher belastete Bereiche können mit einer größeren und geringer belastete Bereiche mit einer kleineren Materialstärke versehen werden, so dass auf unnötige Materialanhäufungen verzichtet werden kann.

Die Festlegung des Halteelements innerhalb der Aufnahme erfolgt vorteilhaft durch Kleben, Verschrauben oder Vernieten, wobei jedoch auch andere Befestigungstechniken eingesetzt werden können.

Vor allem zur Erhöhung der Quersteifigkeit des Leichtbauelements ist es von Vorteil, wenn die seitlichen Laminatschalen an ihren Innenseiten bereichsweise Aussteifungen aufweisen. Die Aussteifungen sind nicht vollflächig über die Innenseiten der Laminatschalen verteilt, sondern nur bereichsweise vorgesehen, was ebenfalls einer leichtgewichtigen Bauweise zuträglich ist.

Vorteilhaft werden die Aussteifungen von einem Stützstoff gebildet. Als Stützstoffe können z.B. Schäume oder Waben eingesetzt werden. In diesem Zusammenhang hat es sich ferner als vorteilhaft erwiesen, wenn der Stützstoff zwischen den Innenseiten der Laminatschalen und einer den Stützstoff rückseitig abdeckenden Deckschicht angeordnet ist.

Alternativ oder zusätzlich können auch Aussteifungen in Form von Stützrippen vorgesehen werden, wobei die Aussteifung des Leichtbauelements besonders effektiv ist, wenn die Stützrippen die Laminatschalen parallel zur Kraftrichtung miteinander verbinden.

Eine vorteilhafte Ausgestaltung sieht vor, dass die Stützrippen aus zwei Schichten mit einem dazwischen liegend angeordneten Stützstoff aufgebaut sind, wodurch sich eine gute Aussteifung des Leichtbauelements ergibt.

Schließlich wird vorgeschlagen, dass an der Oberseite des Leichtbauelements ein Dichtelement angeordnet ist. Als Dichtelement können z.B. strangförmige Gummielemente eingesetzt werden, die oberseitig den Abschluss des Leichtbauelements gegenüber einem Deckenelement im Flugzeuginneren bilden. Hierdurch ergibt sich eine spaltfreie Anbindung des Leichtbauelements, so dass Licht nicht von einer Seite des Leichtbauelements auf die andere durchscheint.

Weitere Einzelheiten und Vorteile eines erfindungsgemäßen Leichtbauelements werden nachfolgend unter Zuhilfenahme der beigefügten Zeichnungen eines Ausführungsbeispiels erläutert. Darin zeigen:
- Figur 1:: eine perspektivische Ansicht eines Leichtbauelements,
- Figur 2:: zur Veranschaulichung einer Einbausituation eine schematische und auf hier interessierenden Komponenten reduzierte Ausschnittsdarstellung einer Flugzeugkabine in Flugrichtung betrachtet,
- Figur 3:: eine seitliche Ansicht eines Leichtbauelements in teilweise geschnittener Darstellung,
- Figur 4:: eine Draufsicht auf das Leichtbauelement nach Figur 3,
- Figur 5:: eine weitere Ansicht des Leichtbauelements aus Figur 3 aus der in Figur 3 mit V bezeichneten Richtung,
- Figur 6:: eine Einzelheit gemäß der in Figur 3 mit VI-VI bezeichneten Schnittebene,
- Figur 7:: eine vergrößerte Darstellung der in Figur 3 mit VII bezeichneten Einzelheit,
- Figur 8:: eine vergrößerte Darstellung der in Figur 3 mit VIII bezeichneten Einzelheit,
- Figur 9:: eine vergrößerte Darstellung der in Figur 5 mit IX bezeichneten Einzelheit,
- Figur 10:: in vereinfachter Darstellung eine perspektivische Ansicht zur Veranschaulichung der Schalenbauweise gemäß einer ersten Ausführung,
- Figur 11:: eine der Figur 10 entsprechende Frontaldarstellung,
- Figur 12:: in vereinfachter Darstellung eine perspektivische Ansicht zur Veranschaulichung der Schalenbauweise gemäß einer zweiten Ausführung und
- Figur 13:: eine der Figur 12 entsprechende Frontaldarstellung.

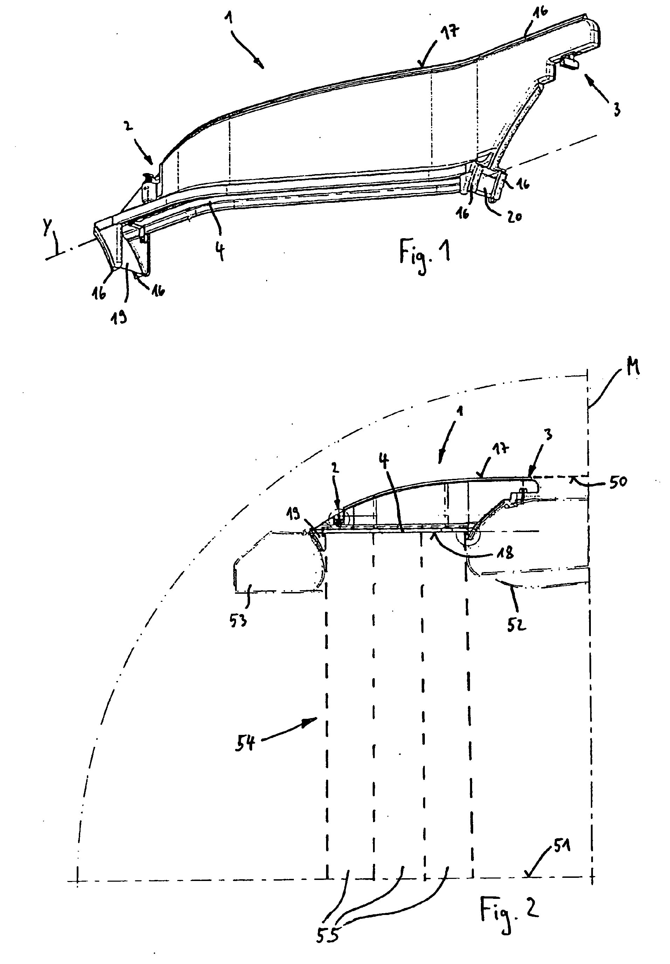

Der Gesamtaufbau und die Funktion eines erfindungsgemäßen Leichtbauelements 1 zur Befestigung von Raumteilern 54 in Flugzeuginnenräumen lässt sich den Darstellungen in Figur 1 und Figur 2 anschaulich entnehmen.

Das Leichtbauelement 1 weist im Bereich seines einen Endes einen ersten Montagepunkt 2 und im Bereich des anderen Endes einen weiteren Montagepunkt 3 zur Festlegung des Leichtbauelements 1 im Deckenbereich des Flugzeuginnenraums auf. Die Einbausituation des Leichtbauelements 1 im Flugzeuginnenraum ist in Figur 2 veranschaulicht, die in Flugrichtung betrachtet einen hälftigen Ausschnitt des Passagierraums zeigt. Auf der anderen Seite der Mittellinie M befindet sich in spiegelsymmetrischer Anordnung ein weiteres Leichtbauelement 1. Zu erkennen ist, dass das Leichtbauelement 1 im Bereich des Montagepunkts 2 an der in diesem Bereich gekrümmt in eine Flugzeugwand übergehenden Decke 50 des Flugzeuginnenraums befestigt ist. Oberhalb der Decke 50 und zwischen dieser und der durch die strichpunktierte Linie angedeuteten Außenkontur des Flugzeugs befinden sich u.a. die für die Statik des Flugzeugs erforderlichen Tragelemente, Versorgungsleitungen, etwa zur Luft- und Stromversorgung, usw.. Die Decke 50 bildet für die Flugpassagiere nach oben hin den Abschluss der Kabine. Nach unten hin wird der Flugzeuginnenraum von einem Boden 51 begrenzt, auf welchem beispielsweise die in Figur 2 nicht dargestellten Sitze oder sonstige Einbauteile montiert sind.

Während das Leichtbauelement 1 im Bereich des weiter außen liegenden Montagepunkts 2 gegenüber der Decke 50 festgelegt ist, erfolgt die Befestigung am mehr flugzeugeinwärts liegenden Montagepunkt 3 an einem tiefer liegenden Flugzeuginnenteil, das beim Ausführungsbeispiel von einem Gepäckfach 52 gebildet wird. Sowohl im Bereich des Montagepunkts 2 wie auch im Bereich des Montagepunkts 3 sind Montageelemente vorgesehen, die eine Einstellung des Leichtbauelements 1 in mehreren Richtungen erlauben. Beispielsweise kann die Höhe des Leichbauelements 1 innerhalb der Kabine und dessen Winkelstellung gegenüber der in Fig. 1 eingezeichneten Längsachse y eingestellt werden.

Wie die Darstellungen in den Figuren 1 und 2 weiter erkennen lassen, besteht die Funktion des Leichtbauelements 1 im Wesentlichen in der lösbaren Befestigung eines Raumteilers 54, wozu das Leichtbauelement 1 unterseitig mit einem Halteelement 4 versehen ist und weshalb solche Leichtbauteile 1 auch als "curtain header" bezeichnet werden. Beim Ausführungsbeispiel ist der Raumteiler 54 aus insgesamt drei einzelnen Vorhangelementen 55 zusammengesetzt, die sich von dem am Leichtbauelement 1 vorgesehenen Halteelement 4 vertikal nach unten in den Flugzeuginnenraum hinein bis zum Boden 51 erstrecken. Neben der dargestellten Ausführung mit drei Vorhangelementen 55 sind auch anders gestaltete Raumteiler 54 einsetzbar. Beispielsweise können breitere, aus einem Stück bestehende Vorhänge eingesetzt werden. Auch Lösungen mit zwei oder mehr als drei Einzelelementen 55 sind denkbar. Auch kann es sich bei den Elementen 55 um verschiebbare Trennwandelemente aus einem ausreichend steifen Material handeln.

Der Raumteiler 54 dient zur Unterteilung des Flugzeuginnenraums in verschiedene Abschnitte. Beispielsweise werden Trennwände zwischen den unterschiedlichen Klassen, beispielsweise der ersten Klasse und der Economy Class vorgesehen, können aber auch im Bereich eines Lagerraums und zum Abtrennen ähnlicher Innenräume eines Flugzeug verwendet werden.

Das Leichtbauelement 1 weist eine an die Kontur der Flugzeugdecke 50 angepasste, entsprechend gekrümmt verlaufende Oberseite 17 auf. Die Unterseite 18 verläuft hingegen über einen weiten Bereich geradlinig, d.h. parallel zum Flugzeugboden 51. In diesem geradlinigen Bereich der Unterseite 18 ist das Halteelement 4 vorgesehen. Die Länge des geradlinigen Bereichs bzw. des Halteelements 4 entspricht in etwa der Breite eines Bordganges, der sich zwischen den Gepäckfächern 52, 53 bzw. zwischen einer seitlichen und einer mittleren Sitzreihe befindet.

Bei dem Halteelement 4 handelt es sich um ein schienenförmiges Element, in welches der Raumteiler 54 bzw. dessen Elemente ähnlich Gardinen innerhalb einer Gardinenleiste eingehängt sind. Zusätzlich können die Trennwandelemente 54 auch gegenüber dem Flugzeugboden 51 festgelegt sein, etwa in entsprechenden Führungen, oder durch Verspannen, Verklemmen, Verschrauben usw..

Aufgrund der Aufhängung der Raumteiler 54 in der Halteschiene 4 des Leichtbauelements 1 hängt das Gewicht der Raumteiler 54 an dem Leichtbauelement 1. Darüber hinaus kann es zeitweise zu größeren Belastungen des Leichtbauelements 1 kommen, etwa durch fallende Passagiere, die sich an dem Raumteiler 54 festhalten, um einen Sturz abzuwenden. Auch solche Belastungen müssen von dem Leichtbauelement 1 aufgefangen werden.

Solche mechanischen Kräfte werden über die Montagepunkte 2, 3 an den Verbindungspartner, beispielsweise die Decke 50 oder das Gepäckfach 52, übertragen und von dort weiter in die Stützkonstruktion des Flugzeugs abgeführt. Dabei fließen die zu übertragenden Kräfte von dem gegenüber den Montagepunkten 2, 3 beabstandeten Halteelement 4 über die äußere Kontur des Leichtbauelements 1. Diese äußere Kontur wird von miteinander verbundenen Schalen in Laminatbauweise gebildet wird, worauf nachfolgend noch näher einzugehen sein wird.

Im Bereich der Enden des Halteelements 4 sind daran jeweils Anschlussstücke 19, 20 ausgebildet, welche zur Seite hin einen dichten Abschluss des Raumteilers 54 gegenüber der Kontur der Gepäckfächer 52, 53 bilden. Sowohl die Anschlussstücke 19, 20 wie auch die Oberseite 17 des Leichtbauelements 1 sind mit strangförmigen Dichtelementen 16 versehen, die einen dichten Abschluss des Leichtbauelements 1 gegenüber den benachbarten Flugzeuginnenbauteilen gewährleisten.

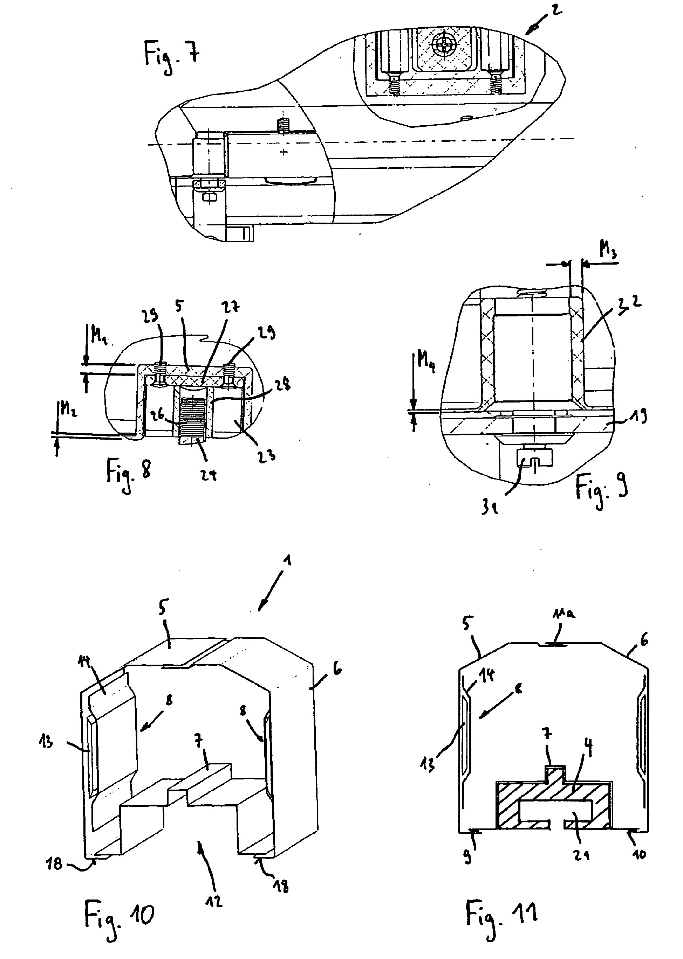

Nachfolgend werden zunächst Einzelheiten der Schalenbauweise des Leichtbauelements anhand der Darstellungen in den Figuren 10 bis 13 erläutert, bevor dann auf konstruktive Einzelheiten des Leichtbauelements eingegangen wird.

Figur 10 zeigt in schematisierter Darstellung einen kurzen Abschnittsbereich des Leichtbauelements 1, der unterseitig mit dem Halteelement 4 versehen werden kann. Anhand des in Figur 10 dargestellten Abschnitts des Leichtbauelements 1 lässt sich dessen schalenförmiger Aufbau aus drei einzelnen Laminatschalen 5, 6, 7, der sich im Prinzip über die gesamte Länge des Leichtbauelements 1 so fortsetzt, erkennen. Zur besseren Veranschaulichung sind zwischen den sich überlappenden Rändern der einzelnen Schalen 5, 6, 7 übergroße Abstände eingezeichnet, die in Wirklichkeit so nicht vorhanden sind.

Wie sich der Figur 10 bzw. der Frontalansicht Figur 11 entnehmen lässt, ist das Leichtbauelement 1 zusammengesetzt aus zwei seitlichen Laminatschalen 5, 6 und einer im Bereich der Unterseite 18 des Leichtbauelements 1 angeordneten Laminatschale 7. Der von den Laminatschalen 5, 6, 7 umschlossene Raum ist hohl, was zum sehr geringen Gewicht des Leichtbauelements 1 beiträgt. Die Hauptflächen der seitlichen Laminatschalen 5, 6 verlaufen vertikal. Diese Hauptflächen weisen in Flugzeuglängsrichtung. Oben, d.h. entlang des oberen Randes des Leichtbauelements 1, ist die Laminatschalen 5 unmittelbar mit der Laminatschale 6 verbunden.

In Figur 11 sind die zwischen den Laminatschalen 5, 6, 7 vorhandenen Fügestellen 9, 10, 11a gekennzeichnet, die sich jeweils im Bereich von Materialüberlappungen der Laminatschalen 5, 6, 7 befinden. Die Verbindung der Laminatschalen 5, 6, 7 über die Fügestellen 9, 10, 11a kann im Anschluss an deren Herstellung mittels verschiedener Verbindungstechniken, beispielsweise durch Verkleben, Nieten oder Verschrauben, erfolgen. Im Hinblick auf eine möglichst einfache Fertigung des Leichtbauelements 1 hat sich ein Verkleben der Schalenbauteile 5, 6, 7 entlang ihrer sich überlappenden Ränder als vorteilhaft erwiesen.

Die sich im wesentlichen horizontal entlang des unteren Randes des Leichtbauelements 1 erstreckende, untere Laminatschale 7 bildet eine Aufnahme 12 für das Halteelement 4, das in Figur 11 stark schematisiert in schraffierter Darstellung eingezeichnet ist. Die Aufnahme 12 ist nach Art einer länglichen Öffnung oder einer Nut in der unteren Laminatschale 7 geformt. Das Halteelement 4 ist mit der Laminatschale 7 fest verbunden bzw. in deren Aufnahme 12 eingebunden, vorzugsweise durch Verkleben. Jedoch sind auch andere Befestigungstechniken, etwa ein Vernieten oder Verschrauben, für die Verbindung zwischen dem Halteelement 4 und der Laminatschale 7 denkbar.

Das Halteelement 4 weist die Form einer Profilschiene mit einer nach unten offenen Öffnung 21 auf. Diese weist im Querschnitt die Gestalt einer hinterschnittenen Nut auf. Die Öffnung 21 dient zur Fixierung des Raumteilers bzw. der an der Oberseite des Raumteilers vorgesehenen Befestigungselemente, die von unten her in die Öffnung 21 eingeführt und durch Verdrehen, durch geeignete Clip- oder Verrastmechanismen o.ä. in der Öffnung 21 verschiebbar gehalten werden. Die Befestigung ist ähnlich einer Gardine innerhalb einer Gardinenleiste.

Nach dem Einhängen des Raumteilers lastet dessen Gewicht an dem Leichtbauelement 1. Die entsprechenden Kräfte und ggf. zusätzliche, auf den Raumteiler einwirkende Kräfte fließen über die untere Laminatschale 7 in die seitlichen Laminatschalen 5 und 6, und von diesen über die Montagepunkte 2, 3 in die Tragstruktur des Flugzeugs. Für einen optimalen Kraftfluss stützen sich die beiden Längsränder der Laminatschale 7 von oben her auf Rändern der Laminatschalen 5, 6 ab. Bei diesen Rändern handelt es sich um zu der unteren Laminatschale 7 hin gerichtete Abwinklungen am unteren Rand 18 der Laminatschalen 5, 6. Infolge dieser Anordnung liegen die Laminatschalen 5, 6, 7 unmittelbar im Kraftfluss zwischen den Montagepunkten 2, 3 und dem Halteelement 4.

Um diesen Kräften bei gleichzeitig gewichtssparender Bauweise standhalten zu können, sind die Schalen 5, 6, 7 in Laminatbauweise, d.h. aus einer oder mehreren übereinander liegenden, gleichartigen Schichten aufgebaut. Beispielsweise können die Laminatschalen 5, 6, 7 aus einem faserverstärkten Material, etwa glasfaserverstärktem Kunststoff oder karbonfaserverstärkten Materialien bestehen. In Anpassung an die Belastungen des Leichtbauelements 1 können die Fasern parallel nebeneinander angeordnet oder nach Art von sich kreuzenden Gewebeeinlagen angeordnete Fasern verwendet werden.

Durch die Laminatbauweise der Laminatschalen 5, 6, 7 lassen sich auf einfache Art und Weise auch komplexe Außenkonturen des Leichtbauelements 1 erzeugen. Denn die Laminatschalen 5, 6, 7 werden in anwendungsspezifisch für die gewünschte Schalengeometrie gefertigten Negativformen, beispielsweise unter Verwendung so genannter Prepregs (pre-impregnated-fibres) durch Einlegen einer oder mehrerer Schichten und anschließendem Aushärten unter Temperatur und Druck hergestellt. Dies kann beispielsweise in einem Autoklav erfolgen. Auch ist die Herstellung der Laminatschalen 5, 6, 7 in einer Vorrichtung mit beheizbaren Ober- und Unterformen möglich.

Hinsichtlich der erreichbaren Geometrien sind derartigen Laminatschalen 5, 6, 7 kaum Grenzen gesetzt, selbst komplexe sphärische Konturen sind auf einfache Weise herstellbar. Es ist lediglich darauf zu achten, dass sich die Schalen im Anschluss an die Aushärtung aus der Negativform entfernen lassen. Ein weiterer Vorteil der Laminatbauweise liegt darin, dass der Querschnitt der Laminatschalen 5, 6, 7 nicht über deren gesamten Querschnitt gleichmäßig sein muss, sondern bereichsweise unterschiedlich sein kann. So können etwa Bereiche des Leichtbauelements 1, die in stärkerem Maße zur Übertragung von Kräften zwischen dem Halteelement 4 und den Montagepunkten 2 beitragen, eine größere Materialstärke aufweisen als jene Bereiche des Leichtbauelements 1, die nicht oder nur unwesentlich zur Kraftübertragung beitragen. Durch eine solche Ausgestaltung lässt sich Gewicht einsparen.

Die Bereiche mit größeren Materialstärken können durch Auflaminieren weiterer Laminatschichten in der Negativform auf einfache Weise erreicht werden. Es ergibt sich eine innen liegende und daher von bauteilaußen nicht sichtbare Verstärkung. Die Materialverstärkung erfolgt dabei derart, dass abrupte Materialstärke- bzw. Dickenänderungen aufgrund der damit verbundenen Spannungsspitzen vermieden werden. Bevorzugt sind gleichmäßig abgestufte Übergänge, die einen gleichmäßigen Kraftfluss erlauben.

Gemäß Figur 10 ist das Leichtbauelement 1 mit zwei Aussteifungen 8 versehen, die innenseitig an den beiden seitlichen Laminatschalen 5, 6 vorgesehen sind. Diese Aussteifungen 8 dienen nicht zur Übertragung der Haltekräfte vom Halteelement 4 zu den Montagepunkten, sondern der strukturellen Aussteifung des Leichtbauelements 1, beispielsweise zur Erhöhung von dessen Torsions- oder Quersteifigkeit. Bei der Ausführung gemäß den Figuren 10 und 11 werden die Aussteifungen 8 von einem Stützstoff 13 gebildet. Bei dem Stützstoff 13 handelt es sich nicht um ein in Laminatbauweise hergestelltes Element, sondern um beispielsweise mit der Innenseite der Laminatschalen 5, 6 verbundene Wabenstrukturen, Schäume o.ä., die auf die Innenseiten der Laminatelemente 5 und 6 aufgebracht und über eine rückseitige Deckschicht 14 eine Art Sandwichbereich an den Laminatschalen 5, 6 bilden.

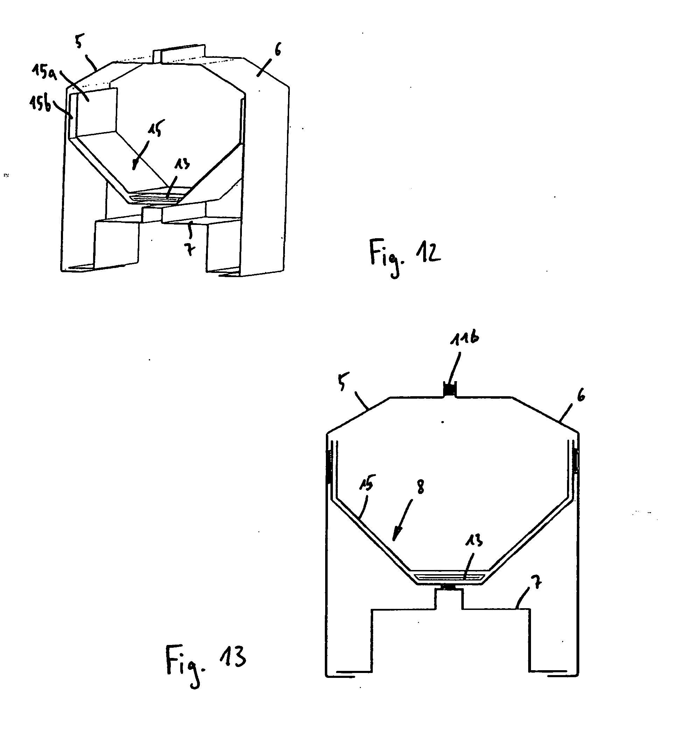

In den Figuren 12 und 13 ist eine weitere Ausführung der Laminatschalen 5, 6, 7 und insbesondere der Aussteifung 8 dargestellt. Die in den Figuren 12 und 13 dargestellte Konstruktion stimmt hinsichtlich der Anordnung der Laminatschalen 5, 6, 7 mit der in den Figuren 10 und 11 dargestellten Konstruktion überein, so dass insoweit auf den obigen Beschreibungstext verwiesen werden kann. Ein erster Unterschied besteht aber in der Ausbildung der Fügestelle 11b zwischen den beiden Seitenschalen 5 und 6. Diese ist nicht, wie zuvor beschrieben, im Bereich einer Materialüberlappung, sondern im Bereich aneinander anliegender Flanschbereiche der Seitenschalen 5 und 6 vorgesehen. Die so gebildete Flanschverbindung kann zum Aufstecken des Dichtelements 16 (vgl. Figur 1) mit einer an diesem entsprechend ausgebildeten, kanalförmigen Öffnung genutzt werden.

Der größte Unterschied gegenüber der ersten Ausführungsform besteht jedoch in der Ausgestaltung der Aussteifung 8, die bei der zweiten Ausführungsform nach Art einer integrierten Stützrippe 15 gebildet ist. Die Stützrippe 15 ist von schalenförmiger, offener oder auch geschlossener Geometrie und erstreckt sich von der einen seitlichen Laminatschale 5 über die untere Laminatschale 7 zur gegenüberliegenden seitlichen Laminatschale 6. Auf diese Weise sind alle Laminatschalen 5, 6, 7 miteinander verbunden. Die Stützrippe 15 weist einen zweischichtigen Aufbau aus zwei Schichten 15a, 15b und einem dazwischen liegend angeordneten Stützstoff 13, etwa Wabenstrukturen oder einem Stützschaum, auf.

Die in den Figuren 10 bis 14 dargestellten Aussteifungen 8 befinden sich nur in bestimmten Innenbereichen des Leichtbauelements 1, in welchen eine Verbesserung der Torsions- bzw. Quersteifigkeit gewünscht ist.

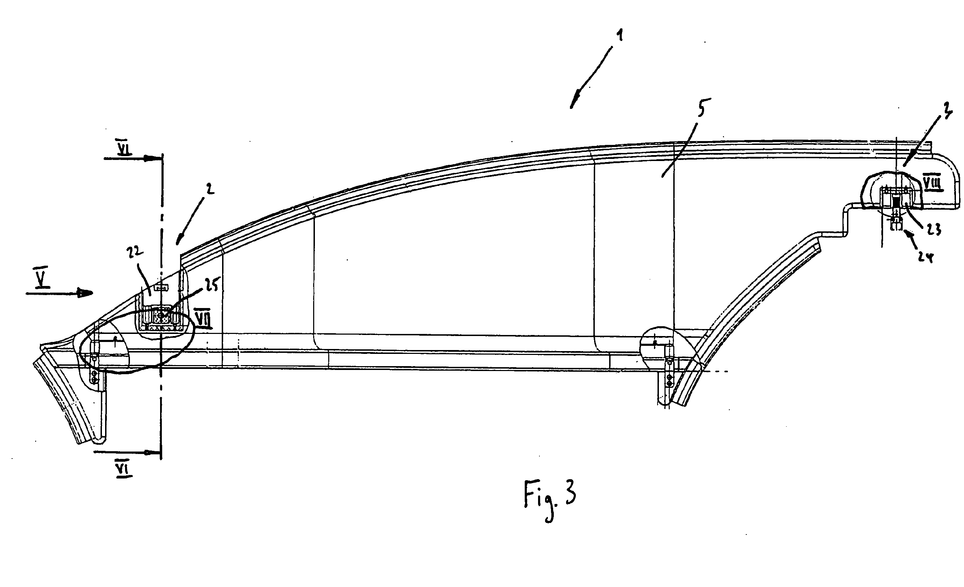

Anhand der Figuren 3 bis 9 werden nachfolgend die konstruktiven Einzelheiten des Leichtbauelements 1 erläutert.

In Figur 3 dargestellt ist eine seitliche Ansicht des Leichtbauelements 1. Zu erkennen ist, dass die beiden sich im wesentlichen senkrecht erstreckenden Laminatschalen 5, 6 im Bereich der Montagepunkte 2, 3 Ausnehmungen 22, 23 zur Unterbringung von Montageelementen 24, 25 bilden.

In Figur 8 sind Einzelheiten des nach Art einer Rastschiene (vgl. Fig. 1) gestalteten Montagelements 24 innerhalb der Ausnehmung 23 dargestellt. Zu erkennen ist, dass das Montageelement 24 einen Gewindeabschnitt 26 aufweist, über den die Position des Leichtbauelements 1 in der Höhe einstellbar ist. Der Gewindeabschnitt 26 ist in eine hülsenförmige, über eine Montageplatte 27 an den Laminatschalen 5, 6 festgelegte Gewindehülse 28 eingeschraubt. Das Montageelement 24 ist mit der Gewindehülse 28 und der mit dieser fest verbundenen Montageplatte 27 über Schrauben 29 am Material der Laminatschalen 5 und 6 befestigt, wobei der Schnitt die Laminatschale 5 zeigt. Die Laminatschale 5 weist im Bereich der Verschraubungen 29 eine Materialstärke M₁ auf, die größer ist als jene in anderen Bereichen der Laminatschale 5, etwa in dem Bereich mit der Materialstärke M₂. Die größere Materialstärke M₁ im Bereich der Verschraubungen 29 kann durch eine oder mehrere zusätzliche Laminatlagen erreicht werden.

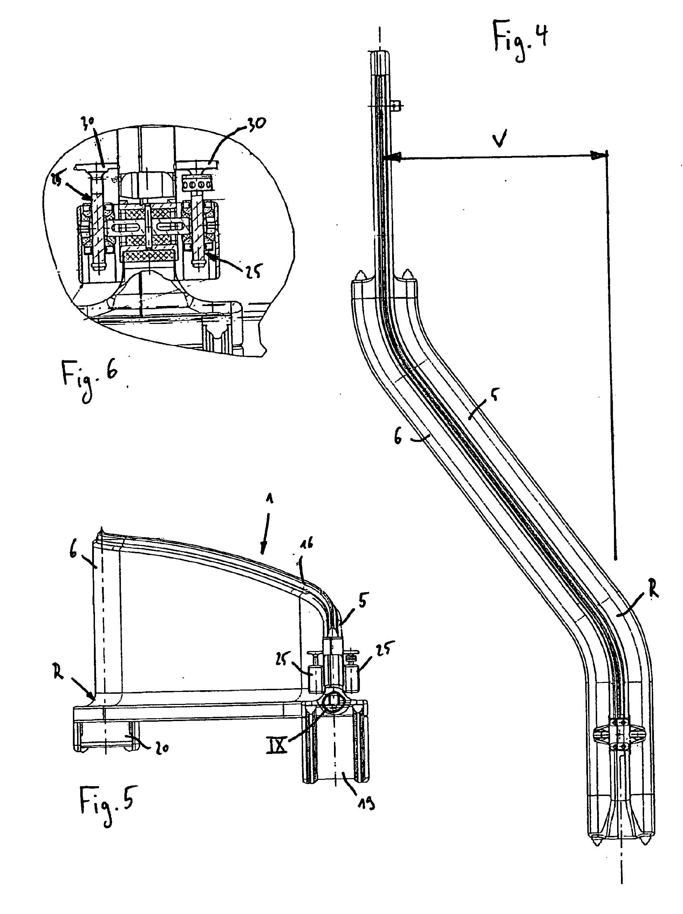

In Figur 5 und in der Schnittansicht Figur 6 sind Einzelheiten des Montageelements 25 des weiteren Montagepunkts 2 dargestellt. Zu erkennen ist, dass auf beiden Seiten des Leichtbauelements 1, d.h. sowohl seitlich der Schale 6 wie auch seitlich der Schale 5 jeweils ein Montageelement 25 vorgesehen ist, so dass sich über die Montageelemente 25 neben einer Einstellung der Montagehöhe des Leichtbauelements 1 auch dessen Winkelstellung gegenüber der Flugzeugdecke einstellen bzw. justieren lässt. Die Montageelemente 25 weisen jeweils einen tellerförmigen Abschnitt zur Festlegung gegenüber der Decke im Flugzeuginnenraum auf.

In Figur 9 schließlich ist die Befestigung des Anschlussstücks 19 dargestellt, die auch beim Anschlussstück 20 in ähnlicher Weise erfolgt. Die Festlegung erfolgt über einen Schraubbolzen 31, der von unten her durch eine Öffnung des Anschlussstücks 19 hindurch mit einer Aufnahmegeometrie 32 verschraubt ist. Wiederum zu erkennen ist, dass die Materialstärke M₃ im Bereich der Aufnahmegeometrie 32 sehr viel größer ist als die in einem benachbarten Bereich eingezeichnete Materialstärke M₄.

Neben der Anpassung der Materialstärken entsprechend dem Kraftfluss und den damit verbundenen Gewichtsvorteilen zeichnet sich die Laminatbauweise der Schalen 5, 6, 7 insbesondere durch die erreichbare gestalterische Freiheit aus. Wie die Darstellung in Figur 4 zeigt, ist das Leichtbauelement 1 von komplexer Gestalt und weist über seine Länge betrachtet einen seitlichen Versatz V auf, also eine Verkröpfung. Darüber hinaus sind im unteren Bereich der Schalen 5, 6 enge Radien R vorgesehen (vgl. Fig. 5), die dem seitlichen Versatz des Leichtbauelements 1 folgen und sich in konventioneller Bauart nicht oder nur mit erhöhtem Aufwand realisieren lassen. Gerade die runden Formen der Laminatschalen 5, 6, 7 erlauben jedoch einen gleichmäßigen Kraftfluss zwischen dem Halteelement 4 und den Montagepunkten 2, 3. Spannungsspitzen, wie diese bei scharfkantigen Übergängen auftreten können, werden vermieden.

Wie vorstehend beschrieben wurde, erlaubt das erfindungsgemäße Leichtbauelement eine gegenüber dem Stand der Technik gewichtsreduzierte Bauweise, wobei aufgrund der Laminatschalenbauweise eine große Gestaltungsfreiheit erreicht wird.

Die Erfindung ist nicht auf das dargestellte und beschriebene Ausführungsbeispiel beschränkt, sondern erstreckt sich allgemein auf Trennwände, Stauraumstrukturen, Stauraummöbel, Bordküchen- und Waschraumstrukturen sowie Balkenelemente zum Tragen von Vorhängen oder Blenden für Flugzeugkabinen.

### Bezugszeichenliste

- 1: Leichtbauelement
- 2: Montagepunkt
- 3: Montagepunkt
- 4: Halteelement
- 5: Laminatschale
- 6: Laminatschale
- 7: Laminatschale
- 8: Aussteifung
- 9: Fügestelle
- 10: Fügestelle
- 11 a: Fügestelle
- 11 b: Fügestelle
- 12: Aufnahme
- 13: Stützstoff
- 14: Deckschicht
- 15: Stützrippe
- 16: Dichtelement
- 17: Oberseite
- 18: unterer Rand, Unterseite
- 19: Anschlussstück
- 20: Anschlussstück
- 21: Öffnung
- 22: Ausnehmung
- 23: Ausnehmung
- 24: Montageelement
- 25: Montageelement
- 26: Gewindeabschnitt
- 27: Montageplatte
- 28: Gewindehülse
- 29: Schraube, Verschraubung
- 30: tellerförmiger Abschnitt
- 31: Schraubbolzen
- 32: Aufnahmegeometrie
- 50: Decke
- 51: Boden
- 52: Gepäckfach
- 53: Gepäckfach
- 54: Raumteiler
- 55: Element

- M: Mittellinie
- M₁: Materialstärke
- M₂: Materialstärke
- M₃: Materialstärke
- M₄: Materialstärke
- V: Versatz
- R: Radius
- Y: Achse

## Patentansprüche

1. Leichtbauelement zur Befestigung eines Raumteilers in einem Flugzeuginnenraum, mit Montagepunkten (2, 3) zur Festlegung des Leichtbauelements im Flugzeuginnenraum und einem Halteelement (4) zur lösbaren Befestigung des Raumteilers, wobei die Montagepunkte (2, 3) und das Halteelement (4) über die äußere Kontur des Leichtbauelements bildende Laminatschalen (5, 6, 7) miteinander kraftflussverbunden sind, und wobei die Laminatschalen (5, 6, 7) über Fügestellen (9, 10, 11 a, 11 b) miteinander verbunden sind, **dadurch gekennzeichnet, dass** sich die Laminatschalen (5, 6, 7) aus zwei die Seitenwände des Leichtbauelements bildenden Laminatschalen (5, 6) und einer dazwischen angeordneten, unteren Laminatschale (7) zusammensetzen, dass die Laminatschalen (5, 6, 7) entlang sich überlappender Ränder miteinander verbunden sind, wobei sich die untere Laminatschale (7) von oben her auf Rändern der seitlichen Laminatschalen (5, 6) abstützt, und dass die untere Laminatschale (7) eine Aufnahme (12) zur Unterbringung des Halteelements (4) aufweist.

2. Leichtbauelement nach Anspruch 1,
**dadurch gekennzeichnet,**
**dass** die Laminatschalen (5, 6, 7) aus einem faserverstärkten Material bestehen.

3. Leichtbauelement nach einem der Ansprüche 1 und/oder 2,
**dadurch gekennzeichnet,**
**dass** die Materialstärke der Laminatschalen (5, 6, 7) bereichsweise unterschiedlich ist.

4. Leichtbauelement nach Anspruch 1,
**dadurch gekennzeichnet,**
**dass** das Halteelement (4) durch Kleben, Verschrauben oder Vernieten in der Aufnahme (12) festgelegt ist.

5. Leichtbauelement nach einem der vorgehenden Ansprüche,
**dadurch gekennzeichnet,**
**dass** die Laminatschalen (5, 6) an ihren Innenseiten bereichsweise Aussteifungen (8) aufweisen.

6. Leichtbauelement nach Anspruch 5,
**dadurch gekennzeichnet,**
**dass** die Aussteifungen (8) von einem Stützstoff (13) gebildet werden.

7. Leichtbauelement nach Anspruch 6,
**dadurch gekennzeichnet,**
**dass** der Stützstoff (13) zwischen den Innenseiten der Laminatschalen (5, 6) und einer Deckschicht (14) angeordnet ist.

8. Leichtbauelement nach Anspruch 4 und/oder 5,
**dadurch gekennzeichnet,**
**dass** die Aussteifungen (8) von Stützrippen (15) gebildet werden.

9. Leichtbauelement nach Anspruch 8,
**dadurch gekennzeichnet,**
**dass** die Stützrippen (15) die Laminatschalen (5, 6, 7) miteinander verbinden.

10. Leichtbauelement nach einem der Ansprüche 8 und/oder 9,
**dadurch gekennzeichnet,**
**dass** die Stützrippen (15) aus zwei Schichten (15a, 15b) mit einem dazwischen liegend angeordneten Stützstoff (13) aufgebaut sind.

11. Leichtbauelement nach einem der vorhergehenden Ansprüche,
**gekennzeichnet durch**
ein an dessen Oberseite (17) angeordnetes Dichtelement (16).

## Claims

1. A lightweight construction element for mounting a room divider in an aircraft interior, said lightweight construction element having mounting points (2, 3) for fixation of said lightweight construction element inside said aircraft interior and having a holding member (4) for detachable fixation of said room divider, wherein said mounting points (2. 3) and said holding member (4) are connected by flux of force via the outer contour of laminate shells (5, 6, 7) forming said lightweight construction element and wherein said laminate shells (5, 6, 7) are connected via joint points (9, 10, 11a, 11b) with each other, **characterised in that** said laminate shells (5, 6, 7) are composed of laminate shells (5, 6) forming the side walls of said lightweight construction element and a lower laminate shell (7) disposed therebetween, said laminate shells (5, 6, 7) being connected via overlapping edges, wherein said lower laminate shell (7) rests on edges of the side laminate shells (5, 6) from above, said lower laminate shell (7) comprising a reception (12) for storing said holding member (4).

2. The lightweight construction element according to claim 1, **characterised in that** said laminate shells (5, 6, 7) consist of a fibre-reinforced material.

3. The lightweight construction element according to claim 1 and/or claim 2, **characterised in that** the material thickness of the laminate shells (5, 6, 7) differs area by area.

4. The lightweight construction element according to claim 1, **characterised in that** said holding member (4) is mounted in the reception (12) by gluing, screwing or riveting.

5. The lightweight construction element according to any of the preceding claims, **characterised in that** said laminate shells (5, 6) each have areas with reinforcements (8) on their inner sides.

6. The lightweight construction element according to claim 5, **characterised in that** said reinforcements (8) are formed by a support structure (13).

7. The lightweight construction element according to claim 6, **characterised in that** said support structure (13) is arranged between the inner sides of the laminate shells (5, 6) and a cover layer (14).

8. The lightweight construction element according to claim 4 and/or claim 5, **characterised in that** said reinforcements (8) are formed by support ribs (15).

9. The lightweight construction element according to claim 8, **characterised in that** said support ribs (15) connect said laminate shells (5, 6, 7) to each other.

10. The lightweight construction element according to claim 8 and/or claim 9, **characterised in that** said supports ribs (15) are built from two layers (15a, 15b) with a support structure (13) interposed therebetween.

11. The lightweight construction element according to claim 8, **characterised by** a sealing element (16) arranged on an upper side (17) of said lightweight construction element.

## Revendications

1. Élément de construction léger pour la fixation d'un panneau de séparation dans un espace intérieur d'aéronef, ledit élément de construction comportant des points de montage (2, 3) pour la fixation de l'élément de construction léger dans l'espace intérieur d'un aéronef et un élément de support (4) pour la fixation amovible du panneau de séparation, les points de montage (2, 3) et l'élément de support (4) étant reliés, de façon à canaliser les forces, par des feuillets stratifiés (5, 6, 7) formant le contour extérieur de l'élément de construction léger, et les feuillets stratifiés (5, 6, 7) étant reliés entre eux par des points d'assemblage (9, 10, 11a, 11b), **caractérisé en ce que** les feuillets stratifiés (5, 6, 7) se composent de deux feuillets stratifiés (5, 6) formant les parois latérales de l'élément de construction léger et d'un feuillet stratifié inférieur (7) pris en sandwich entre ceux-ci, **en ce que** les feuillets stratifiés (5, 6 ,7) sont reliés entre eux le long de bords disposés à recouvrement, la feuillet stratifié inférieur (7) s'appuyant depuis le haut sur des bords des feuillets stratifiés latéraux (5, 6), et **en ce que** le feuillet stratifié inférieur (7) comporte un logement (12) destiné à recevoir l'élément de support (4).

2. Élément de construction léger selon la revendication 1, **caractérisé en ce que** les feuillets stratifiés (5, 6, 7) sont en un matériau renforcé par des fibres.

3. Élément de construction léger selon l'une des revendications 1 et/ou 2, **caractérisé en ce que** le matériau des feuillets stratifiés (5, 6, 7) présente des zones d'épaisseur différente.

4. Élément de construction léger selon la revendication 1, **caractérisé en ce que** l'élément de support (4) est fixé dans le logement (12) par collage, vissage ou rivetage.

5. Élément de construction léger selon l'une des revendications précédentes, **caractérisé en ce que** les feuillets stratifiés (5, 6) comporte sur leur côté intérieur des zones avec des renforts (8).

6. Élément de construction léger selon la revendication 5, **caractérisé en ce que** les renforts (8) sont formés par une matière de soutien (13).

7. Élément de construction léger selon la revendication 6, **caractérisé en ce que** la matière d'appui (13) est disposée entre les côtés intérieurs des feuillets stratifiés (5, 6) et une couche de recouvrement (14).

8. Élément de construction léger selon la revendication 4 et/ou 5, **caractérisé en ce que** les renforts (8) sont formés par des nervures de soutien (15).

9. Élément de construction léger selon la revendication 8, **caractérisé en ce que** les nervures de soutien (15) relient les feuillets stratifiés (5, 6, 7) entre eux.

10. Élément de construction léger selon l'une des revendications 8 et/ou 9, **caractérisé en ce que** les nervures de soutien (15) sont réalisées à partir de deux couches (15a, 15b) entre lesquelles est disposée une matière de soutien (13).

11. Élément de construction léger selon l'une des revendications précédentes, **caractérisé en ce que** sur sa surface (17) est disposé un élément d'étanchéité (16).
